**Europäisches Patentamt**

**European Patent Office**

**Office européen des brevets**

(11) Veröffentlichungsnummer: **0 220 497 B1**

# EUROPÄISCHE PATENTSCHRIFT

(45) Veröffentlichungstag der Patentschrift:
22.08.90

(51) Int. Cl.⁵: **A61C 13/265**

(21) Anmeldenummer: **86113140.7**

(22) Anmeldetag: **24.09.86**

(54) Geschiebe für dentale Teilprothesen.

(30) Priorität: **27.09.85 GR 852365**

(43) Veröffentlichungstag der Anmeldung:
**06.05.87 Patentblatt 87/19**

(45) Bekanntmachung des Hinweises auf die Patenterteilung:
**22.08.90 Patentblatt 90/34**

(84) Benannte Vertragsstaaten:
**AT BE CH DE FR GB IT LI LU NL SE**

(56) Entgegenhaltungen:
**DE-A- 1 946 756**
**DE-A- 2 443 584**
**DE-U- 7 026 583**
**DE-U- 8 390 066**
**US-A- 3 820 241**

(73) Patentinhaber: **Mitroussis, Theodoros, Megalou Alexandrou Street 27, Kavala(GR)**

(72) Erfinder: **Mitroussis, Theodoros, Megalou Alexandrou Street 27, Kavala(GR)**

(74) Vertreter: **Keil, Rainer A., Dipl.-Phys. Dr., KEIL & SCHAAFHAUSEN Patentanwälte Eysseneckstrasse 31, D-6000 Frankfurt am Main 1(DE)**

## Beschreibung

Die Erfindung bezieht sich auf ein Geschiebe für dentale Teilprothesen mit einer an oder in einer Krone oder festsitzenden Brücke zu befestigenden Patrize und einer mit der Patrize in wenigstens teilweise formschlüssiger Verbindung stehenden, an einem Prothesengerüst zu verankernden sattelförmigen Matrize, wobei die einander gegenüberliegend angeordneten, vorzugsweise ebenen Berührungsseitenflächen des Längssteges der Patrize ebenso wie die diesen zugekehrten und im montierten Zustand auf diesen aufliegenden, im Innern der Matrize angeordneten Berührungsseitenflächen der Matrize in okklusaler Richtung in einem spitzen Winkel einander zugeneigt sind.

Derartige Geschiebe zur Verbindung eines Prothesenteils mit einem Restzahn sind beispielsweise aus der DE-A 2 443 584 bekannt. Dort ist eine Patrize mit einem schwalbenschwanzförmig ausgebildeten Längssteg offenbart, welche auch als Formteil bei der Herstellung der einstückig mit dem Prothesengerüst gegossenen Matrize verwendet wird. Diese bekannte Ausführungsform hat mehrere Nachteile. Oft ist nicht gewünscht, die Matrize einstückig mit dem Prothesengerüst auszubilden. Eine Matrize mit einer schwalbenschwanzförmigen Ausnehmung ist dann schwierig herzustellen. Außerdem kann sich die Matrize aufgrund der Schwalbenschwanzverbindung derart an der Patrize verkeilen, daß sich das Prothesengerüst nur schwer entnehmen läßt.

In der DE-U 7 026 583 ist ein weiteres Geschiebe zum Verankern einer Zahnprothese oder einer Zahnbrücke beschrieben, welches aus einer Matrize und einer darin angeordneten Patrize besteht, wobei zwei einander gegenüberliegende Flächen der Patrize und die entsprechenden beiden Flächen der Matrize parallel zueinander und die beiden anderen einander gegenüberliegenden Flächen der Patrize sowie der Matrize geneigt zueinander verlaufen. Die Matrize umschließt dabei die Matrize von allen vier Seiten und weist nur an einer Seite einen durchgängigen vertikalen Schlitz zur Aufnahme des Befestigungsarms der Patrize auf. Als nachteilig erweist sich bei dieser Bauweise die schwierige Handhabung beim Zusammenfügen von Matrize und Patrize sowie der relativ hohe Verschleiß aufgrund von Ganzflächenreibung zwischen den zwei jeweils parallel zueinander verlaufenden Flächen von Matrize und Patrize. Zudem müssen bei der Fertigung der parallel verlaufenden Flächen sehr enge Fertigungstoleranzen eingehalten werden, um die notwendige Paßgenauigkeit zu gewährleisten. Ein weiterer Nachteil dieser bekannten Ausführungsform liegt in der nicht genau definierten Endlage, wodurch es zu übermäßigen Belastungen des Kieferkammes kommen kann.

Aufgabe der Erfindung ist es daher, ein Geschiebe der eingangs genannten Art zu schaffen, das möglichst große Fertigungstoleranzen erlaubt und unter leichter Lagefindung bzw. leichtgängigem Aufschieben des Zahnersatzes eine definierte Halterung in der Endlage ermöglicht, bei dem ein Materialverschleiß infolge von Abrieb bei Aufschieben und Entnahme des Zahnersatzes möglichst vermieden wird, und welches den Kieferkamm nicht zu stark belastet.

Diese Aufgabe wird erfindungsgemäß im wesentlichen dadurch gelöst, daß der Längssteg der Patrize in der zur okklusalen Richtung senkrechten Ebene einen im wesentlichen rechteckigen Querschnitt aufweist. Dadurch vereinfacht sich sowohl die Herstellung von Matrize und Patrize als auch das Aufschieben der Matrize auf die Patrize. Dadurch, daß bei dem erfindungsgemäßen Geschiebe die einander gegenüberliegenden Berührungsseitenflächen der Patrize und der Matrize in okklusaler Richtung nicht-parallel zueinander verlaufen, treten diese Berührungsseitenflächen nur im Augenblick ihrer endgültigen Lage zueinander in Haftung. Beim Herausnehmen der Teilprothese entfernen sich die gemeinsamen Berührungsseitenflächen vom ersten Augenblick an immer weiter voneinander, so daß die Teilprothese nach dem ersten Löseruck nahezu reibungslos herausgenommen werden kann. Bei dieser Bewegung wird eine Haftreibung weitestgehend vermieden, so daß ein Materialverschleiß infolge von Abrieb nahezu ausgeschlossen ist. Auch werden zahntechnisch bedingte Fertigungstoleranzen dadurch kompensiert, daß beispielsweise eine übertolerierte Matrize – mit im Vergleich zu den einander gegenüberliegenden Außenseitenflächen der Patrize zu großer Schrägstellung ihrer Innenseitenflächen – nicht ganz so tief auf die Patrize aufzuschieben ist. Dabei ändert sich jedoch die Paßgenauigkeit nicht. Auch ermöglicht es die geometrische Form der im spitzen Winkel zueinander verlaufenden gegenüberliegenden Berührungsseitenflächen von Matrize und Patrize dem Patienten, große Teilprothesen selbst in die Mundhöhle einzulegen und durch einfachen Kontaktschluß der Zahnreihen in die endgültige Lage zu bringen und dort mit definierter Haftkraft zu arretieren. Darüber hinaus wird durch die erfindungsgemäße Maßnahme, daß die einander gegenüberliegenden, vorzugsweise ebenen, einander zugekehrten Berührungsseitenflächen von Matrize und Patrize im spitzen Winkel zueinander verlaufen, eine sehr viel höhere Haltekraft als bei Parallelpassungen erzielt. Ein zusätzlicher Vorteil des erfindungsgemäßen Geschiebes besteht darin, daß die im wesentlichen sattelförmig ausgebildete Matrize in Endlage auf dem Längssteg der Patrize aufliegt. Dadurch ergibt sich ein geschlossenes Geschiebe mit Höhenanschlag, was zu einer Entlastung des Kieferkammes führt.

Eine weitere Erhöhung der Haltekraft läßt sich in einer vorteilhaften Ausgestaltung der Erfindung dadurch erreichen, daß eine am freien Ende des Längssteges der Patrize liegende, vorzugsweise ebene Berührungsstirnfläche des Längssteges und eine in die gleiche allgemeine Richtung weisende, vorzugsweise ebene Berührungsstirnfläche des Quersteges im gleichen Orientierungssinn wie die Berührungsseitenflächen in einem spitzen Winkel zueinander verlaufen und daß die Matrize an ihrer dem freien Ende des Längssteges zugewandten Seite mit einer an der Berührungsstirnfläche des Längssteges geführten Stirnwand abgeschlossen ist und die gegenüberliegende Berührungsstirnfläche der Matrize an der Berührungsstirnfläche des Quersteges der Patrize geführt ist, ohne daß sich dadurch beim Herausnehmen der Teilprothese eine den Abrieb verursachende Gleitreibung einstellen würde.

Nach einem anderen Vorschlag der Erfindung läßt sich eine weitere Friktionssteigerung dadurch erreichen, daß der Rücken des Längssteges der Patrize eine vorzugsweise unmittelbar am Quersteg der Patrize beginnende Einbuchtung mit einer vorzugsweise mindestens der Wandstärke des Verbindungssteges der aus zwei Seitenwangen, einer die Seitenwangen stirnseitig verbindenden Stirnwand und einem die Seitenwangen längsseitig verbindenden Verbindungssteg bestehenden Matrize entsprechenden Tiefe aufweist und die dadurch gebildete Nase des Längssteges in eine entsprechende Aussparung des Verbindungssteges der Matrize formschlüssig eingreift. Daneben wird in dieser bevorzugten Ausführungsform der Erfindung die Vertikalführung der Teilprothese erhöht, d.h. die Teilprothese ist gegen Kippungen und Rotationen an der Krone oder der festsitzenden Brücke abgesichert.

Um auch eine einwandfreie kosmetische Lösung der Verbindung zwischen Teilprothese und Krone im Munde zu ermöglichen, wird bei einer bevorzugten Ausführungsform der Erfindung vorgeschlagen, daß die sich beiderseits des Längssteges der Patrize erstreckenden Seitenflächenbereiche der Berührungsstirnfläche des Quersteges eine der Wandstärke der Seitenwangen der Matrize entsprechende Breite aufweisen und daß die Berührungsstirnfläche der Matrize im Bereich der Seitenwangen an diesen Seitenflächenbereichen geführt ist. Daneben wird durch diese Maßnahme eine Kavitätbildung im Bereich der okklusalen Stoßflächen von Matrize und Patrize vermieden, wodurch einer Geruchsbildung verursachenden Einlagerung von Speiseresten weitestgehend entgegengewirkt ist.

Für eine weitere Verbesserung der Zahnkosmetik ist nach einer vorteilhaften Ausgestaltung der Erfindung vorgesehen, daß die Seitenwangen der Matrize durchgehend gleiche Wandstärke haben.

In einer anderen bevorzugten Ausführungsform der Erfindung ist vorgesehen, daß die Außenwandflächen der Seitenwangen der Matrize in der ineinander geschobenen Lage von Matrize und Patrize mit den jeweiligen Außenflächen des Quersteges der Patrize fluchten, wodurch eine nochmalige Verbesserung der Zahnkosmetik und Geruchsminderung ermöglicht wird. Besonders vorteilhaft ist es dabei, wenn zusätzlich die Oberfläche des Verbindungssteges der Matrize in der ineinander geschobenen Lage von Matrize und Patrize mit der Oberfläche des Quersteges und der Nase der Patrize fluchtet.

In einer besonders bevorzugten Ausführungsform der Erfindung ist vorgesehen, daß die Nase und die Aussparung im wesentlichen rechteckigen oder quadratischen Querschnitt haben, wodurch eine optimale Vertikalführung der Teilprothese erreicht wird.

Auch ist es für die nach der Erfindung vorgeschlagenen Geschiebe möglich, diese aus Metall oder Kunststoff herzustellen.

Die Erfindung wird nachfolgend anhand eines Ausführungsbeispieles, welches in der Zeichnung dargestellt ist, näher erläutert.

Es zeigen:

Fig. 1 eine perspektivische Ansicht der Patrize eines erfindungsgemäßen Geschiebes,
Fig. 2 eine Vorderansicht der Patrize gemäß Fig. 1,
Fig. 3 eine Seitenansicht der Patrize gemäß Fig. 1,
Fig. 4 eine perspektivische Ansicht der Matrize eines erfindungsgemäßen Geschiebes, und
Fig. 5 ein Geschiebe in zusammengeschobenem Zustand mit einer Patrize gemäß Fig. 1 und einer Matrize gemäß Fig. 4.

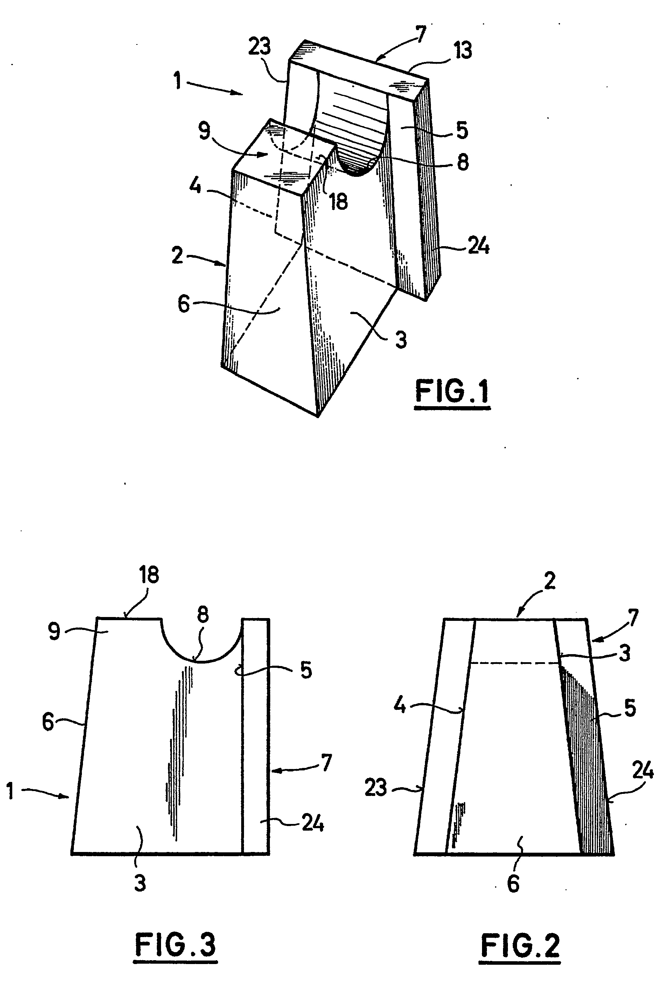

In Fig. 1 ist eine Patrize 1 mit einem im horizontalen Schnitt im wesentlichen T-förmigen Querschnitt gezeigt, die einen Längssteg 2 und einen Quersteg 7 aufweist. Zur Befestigung der Patrize 1 mit einer Krone oder festsitzenden Brücke wird die Patrize 1 mit ihrem Befestigungsteil 13 in eine entsprechende Aussparung der hier nicht gezeigten Krone oder festsitzenden Brücke eingesetzt.

Wie insbesondere aus Fig. 2 zu ersehen ist, sind die eben ausgebildeten Berührungsseitenflächen 3, 4 der Patrize 1 nicht parallel zueinander angeordnet, sondern in okklusaler Richtung einander zugeneigt. Ebenso besteht zwischen den eben ausgebildeten Berührungsstirnflächen 5, 6 der Patrize 1 keine Parallelität wie dies insbesondere aus Fig. 3 hervorgeht. Die Berührungsstirnfläche 6 des Längssteges 2 ist gegenüber der etwa lotrecht verlaufenden Berührungsstirnfläche 5 des Quersteges 7 schräg zum Quersteg 7 hin geneigt. Zur formschlüssigen Aufnahme der Matrize 10 auf die Patrize 1 ist der Längssteg 2 okklusal mit einer unmittelbar am Quersteg 7 beginnenden Einbuchtung 8 versehen, die eine mindestens der Wandstärke des Verbindungssteges 14 der Matrize 10 entsprechende Tiefe besitzt. Durch diese Einbuchtung 8 ist auf dem Rücken 18 des Längssteges 2 eine Nase 9 gebildet, deren Funktion weiter unten näher erläutert wird. Weiterhin sind für bündiges Abschließen der Matrize 10 mit der Patrize 1 die sich beiderseits des Längssteges 2 der Patrize 1 erstreckenden Seitenflächenbereiche der Berührungsstirnfläche 5 des Quersteges in einer der Wandstärke der Seitenwangen 16, 17 der Matrize 10 entsprechenden Breite gehalten.

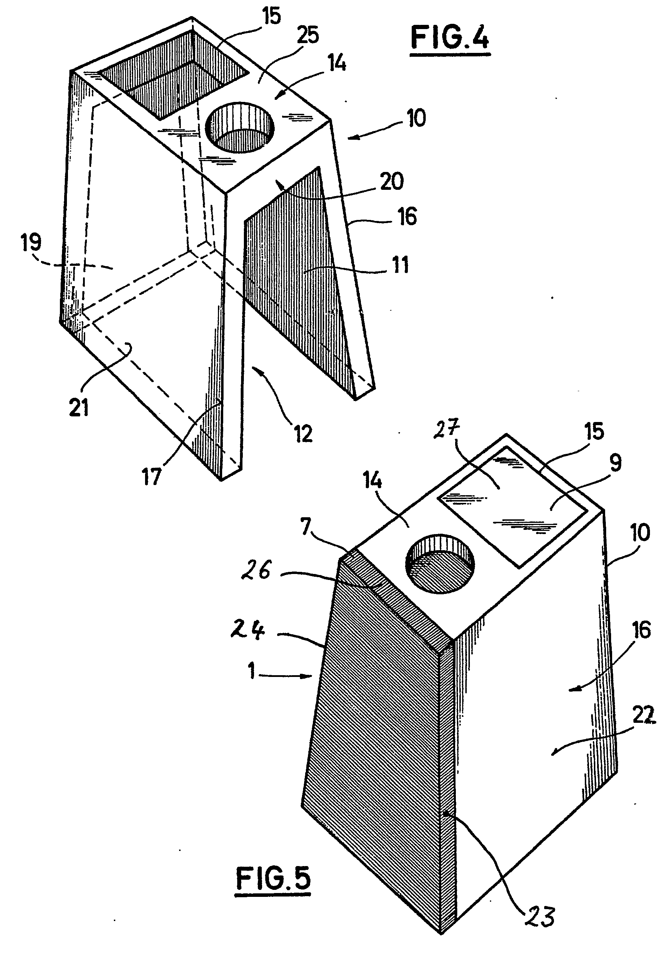

Die in Fig. 4 und 5 gezeigte und an einem hier nicht dargestellten Prothesengerüst zu verankernde Matrize 10 besteht aus zwei Seitenwangen 16, 17, einer diese stirnseitig verbindenden Stirnwand 19 und einem diese längsseitig verbindenden Verbindungssteg 14. Die Seitenwangen 16, 17 der Matrize 10 haben durchgehend gleiche Wandstärke. Die inneren einander gegenüberliegenden Seitenflächen der Seitenwangen 16, 17 der Matrize 10 sind als ebene Berührungsseitenflächen 11, 12 ausgebildet und verlaufen in okklusaler Richtung einander zugekehrt in einem spitzen Winkel zueinander. Ebenso laufen die durch die Stirnwand 19 gebildete innere Berührungsfläche und die Berührungsstirnfläche 20 der Matrize 10 in einem spitzen Winkel zueinander, wobei erstere gegenüber der etwa lotrecht verlaufenden Berührungsstirnfläche 20 der Matrize 10 in okklusaler Richtung zu dieser hin geneigt ist. Zur Aufnahme der Nase 9 der Patrize 1 weist der Verbindungssteg 14 der Matrize 10 eine etwa rechteckige Aussparung 15 auf.

Wenn die Matrize 10 auf die Patrize 1 aufgeschoben wird, treten die Berührungsseitenflächen 3, 4 der Patrize 1 mit den Berührungsseitenflächen 11, 12 der Matrize 10 und die Berührungsstirnfläche 6 der Patrize 1 mit der durch die Stirnwand 19 der Matrize 10 gebildeten Berührungsstirnfläche in Kontakt, wobei die Berührungsstirnfläche 20 der Matrize 10 im Bereich der Seitenwangen 16, 17 an den Seitenflächenbereichen der Berührungsstirnfläche 5 der Patrize 1 geführt ist. Dabei ergibt sich in der Endlage das in Fig. 5 dargestellte Bild, wobei die entsprechenden Berührungsseiten- bzw. Berührungsstirnflächen in Haftung miteinander treten und die Nase 9 der Patrize 1 in die Aussparung 15 des Verbindungssteges 14 der Matrize 10 formschlüssig eingreift.

Wie dies insbesondere aus Fig. 5 zu ersehen ist, sind die Abmessungen von Patrize 1 und Matrize 10 derart gehalten, daß die Außenwandflächen 21, 22 der Seitenwangen 16, 17 in der ineinander geschobenen Lage von Patrize 1 und Matrize 10 mit den jeweiligen Außenflächen 23, 24 des Quersteges 7 der Patrize 1 fluchten, ebenso wie die Oberfläche 25 des Verbindungssteges 14 der Matrize 10 mit der Oberfläche 26 des Quersteges 7 und der Oberfläche 27 der Nase 9 der Patrize 1.

Bezugszeichenliste:

1 Patrize
2 Längssteg
3 Berührungsseitenfläche
4 Berührungsseitenfläche
5 Berührungsstirnfläche
6 Berührungsstirnfläche
7 Quersteg
8 Einbuchtung
9 Nase
10 Matrize
11 Berührungsseitenfläche
12 Berührungsseitenfläche
13 Befestigungsteil (nicht dargestellt)
14 Verbindungssteg
15 Aussparung
16 Seitenwange
17 Seitenwange
18 Rücken
19 Stirnwand
20 Berührungsstirnfläche
21 Außenwandfläche
22 Außenwandfläche
23 Außenfläche
24 Außenfläche
25 Oberfläche
26 Oberfläche
27 Oberfläche

## Patentansprüche

1. Geschiebe für dentale Teilprothesen mit einer an oder in einer Krone oder festsitzenden Brücke zu befestigenden Patrize (1) und einer mit der Patrize (1) in wenigstens teilweiser formschlüssiger Verbindung stehenden, an einem Prothesengerüst zu verankernden sattelförmigen Matrize (10), wobei die Patrize (1) in einer zur okklusalen Richtung senkrechten Ebene einen im wesentlichen T-förmigen Querschnitt aufweist, auf deren Längssteg (2) die Matrize (10) aufschiebbar ist, und wobei die einander gegenüberliegend angeordneten, vorzugsweise ebenen Berührungsseitenflächen (3, 4) des Längssteges (2) der Patrize (1) ebenso wie die diesen zugekehrten und im montierten Zustand auf diesen aufliegenden, im Inneren der Matrize (10) angeordneten Berührungsseitenflächen (11, 12) der Matrize (10) in okklusaler Richtung in einem spitzen Winkel einander zugeneigt sind, dadurch gekennzeichnet, daß der Längssteg (2) der Patrize (1) in einer zur okklusalen Richtung senkrechten Ebene einen rechteckigen Querschnitt aufweist.

2. Geschiebe nach Anspruch 1, dadurch gekennzeichnet, daß eine am freien Ende des Längssteges (2) der Patrize (1) liegende, vorzugsweise ebene Berührungsstirnfläche (6) des Längssteges (2) und eine in die gleiche allgemeine Richtung weisende, vorzugsweise ebene Berührungsstirnfläche (5) des Quersteges (7) in gleichem Orientierungssinn wie die Berührungsseitenflächen (3, 4; 11, 12) in einem spitzen Winkel zueinander verlaufen, daß die Matrize (10) an ihrer dem freien Ende des Längssteges (2) zugewandten Seite mit einer an der Berührungsstirnfläche (6) des Längssteges (2) geführten Stirnwand (19) abgeschlossen ist und daß die gegenüberliegende Berührungsstirnfläche (20) der Matrize (10) an der Berührungsstirnfläche (5) des Quersteges (7) geführt ist.

3. Geschiebe nach Anspruch 1 oder 2, dadurch gekennzeichnet, daß der Rücken (18) des Längssteges (2) der Patrize (1) eine vorzugsweise unmittelbar am Quersteg (7) der Patrize (1) beginnende Einbuchtung (8) mit einer vorzugsweise mindestens der Wandstärke des Verbindungssteges (14) der aus zwei Seitenwangen (16, 17), einer diese stirnseitig verbindenden Stirnwand (19) und einem diese längsseitig verbindenden Verbindungssteg (14) bestehenden Matrize (10) entsprechenden Tiefe aufweist und die dadurch gebildete Nase (9) des Längssteges (2) in eine entsprechende Aussparung (15) des Verbindungssteges (14) der Matrize (10) formschlüssig eingreift.

4. Geschiebe nach einem der Ansprüche 1 bis 3, dadurch gekennzeichnet, daß die sich beiderseits des Längssteges (2) der Patrize (1) erstreckenden Seitenflächenbereiche der Berührungsstirnfläche (5) des Quersteges (7) jeweils eine der Wandstärke der Seitenwangen (16, 17) der Matrize (10) entsprechende Breite aufweisen und daß die Berührungsstirnfläche (20) der Matrize (10) im Bereich der Seitenwangen (16, 17) an den Seitenflächenbereichen geführt ist.

5. Geschiebe nach einem der Ansprüche 1 bis 4, dadurch gekennzeichnet, daß die Seitenwangen (16, 17) der Matrize (10) durchgehend gleiche Wandstärke haben

6. Geschiebe nach einem der Ansprüche 3 bis 5, dadurch gekennzeichnet, daß die Außenwandflächen (21, 22) der Seitenwangen (16, 17) in der ineinander geschobenen Lage von Patrize (1) und Matrize (10) mit den jeweiligen Außenflächen (23, 24) des Quersteges (7) fluchten.

7. Geschiebe nach einem der Ansprüche 1 bis 6, dadurch gekennzeichnet, daß die Oberfläche (25) des Verbindungssteges (14) der Matrize (10) in der ineinander geschobenen Lage von Patrize (1) und Matrize (10) mit der Oberfläche (26) des Quersteges (7) und der Oberfläche (27) der Nase (9) fluchtet.

8. Geschiebe nach einem der Ansprüche 3 bis 7, dadurch gekennzeichnet, daß die Nase (9) und die Aussparung (15) im wesentlichen rechteckigen oder quadratischen Querschnitt haben.

9. Geschiebe nach einem der Ansprüche 1 bis 8, dadurch gekennzeichnet, daß es aus Metall oder Kunststoff besteht.

## Claims

1. Attachment for dental partial prosthesis with a punch (1) to be secured on or in a crown or a firmly seated bridge and a mould (10), in the shape of a saddle, to be anchored to the prosthesis apparatus, connected at least partially in a form-locking manner to the punch (1), wherein the punch (1) has, in a plane which is perpendicular to the occlusal direction, a substantially t-shaped cross-section, onto the longitudinal bar (2) of which the mould (10) is able to be loaded, and wherein the preferably planar contact side faces (3, 4) of the longitudinal bar (2) of the punch (1), arranged opposing each other, as well as the contact side faces (11, 12) of the mould (10), arranged in the interior of the mould (10), facing these and lying on these in the assembled state, are inclined to each other in an occlusal direction at an acute angle, characterised in that the longitudinal bar (2) of the punch (1) has in a plane perpendicular to the occlusal direction, a rectangular cross-section.

2. Attachment according to claim 1, characterised in that a preferably planar contact end face (6) of the longitudinal bar (2), lying at the free end of the longitudinal bar (2) of the punch (1), and a preferably planar contact end face (5) of the transverse bar (7), pointing in the same general direction, extend to each other at an acute angle in the same orientational direction as the contact side faces (3, 4; 11, 12), in that the mould (10) is sealed on its side facing the free end of the longitudinal part (2) with an end wall (19) guided to the contact end face (6) of the longitudinal bar (2) and in that the opposing contact end face (20) of the mould (10) is guided to the contact end face (5) of the transverse bar (7).

3. Attachment according to claim 1 or 2, characterised in that the back (18) of the longitudinal bar (2) of the punch (1) has an indentation (8) starting preferably directly on the transverse bar (7) of the punch (1) with a depth corresponding preferably at least to the wall thickness of the connecting bar (14) of the mould (10), which consists of two side cheeks (16, 17), one end wall (19) connecting these on the end side, and one connecting bar (14) connecting these on the longitudinal side, and in that the lug (9) of the longitudinal bar (2) formed in this way engages in a corresponding recess (15) of the connecting bar (14) of the mould (10) in a form-locking manner.

4. Attachment according to one of claims 1 to 3, characterised in that the side face regions of the contact end face (5) of the transverse bar (7), extending on both sides of the longitudinal bar (2) of the punch (1), have a width in each case corresponding to the wall thickness of the side cheeks (16, 17) of the mould (10), and in that the contact end face (20) of the punch (10) is guided in the region of the side cheeks (16, 17) on the side face regions.

5. Attachment according to one of claims 1 to 4, characterised in that the side cheeks (16, 17) of the mould (10) have the same continuous wall thickness.

6. Attachment according to one of claims 3 to 5, characterised in that the outer wall faces (21, 22) of the side cheeks (16, 17) align with the respective outer faces (23, 24) of the transverse bar (7) when in the position with the punch (1) and mould (10) slid into each other.

7. Attachment according to one of claims 1 to 6, characterised in that the surface (25) of the connecting bar (14) of the mould (10) is aligned with the surface (26) of the transverse bar (7) and the surface (27) of the lug (9) when the punch (1) and mould (10) are in the position slid into each other.

8. Attachment according to one of claims 3 to 7, characterised in that the lug (9) and the recess (15) have substantially rectangular or square cross-sections.

9. Attachment according to one of claims 1 to 8, characterised in that it consists of metal or plastics.

## Revendications

1. Fixation par emboîtement pour prothèses dentaires partielles, comprenant une partie mâle (1) à fixer sur ou dans une couronne ou un bridge fixe et une partie femelle (10) en forme de selle s'adaptant au moins partiellement par complémentarité de formes sur la partie mâle (1) et devant être ancrée sur une ossature de prothèse, la partie mâle (1) présentant dans un plan perpendiculaire à la direction occlusale une section transversale essentiellement en T, sur l'aile longitudinale (2) de laquelle peut être glissée la partie femelle (10), et les surfaces latérales de contact (3, 4) opposées et de préférence planes de l'aile longitudinale (2) de la partie mâle (1) étant inclinées l'une par rapport à l'autre en formant un angle aigu dans la direction occlusale de même que les surfaces latérales de contact (11, 12) de la partie femelle (10) tournées vers lesdites surfaces de contact (3, 4), prenant appui sur elles à l'état monté et disposées à l'intérieur de la partie femelle (10), caractérisée en ce que l'aile longitudinale (2) de la partie mâle (1) présente dans un plan perpendiculaire à la direction occlusale une section transversale rectangulaire.

2. Fixation selon la revendication 1, caractérisée en ce qu'une surface frontale de contact (6) de l'aile longitudinale (2), de préférence plane et située à l'extrémité libre de l'aile longitudinale (2) de la partie mâle (1), et une surface frontale de contact (5) de l'aile transversale (7), de préférence plane et orientée dans la même direction générale, s'étendent en formant un angle aigu, dans le même sens d'orientation que les surfaces latérales de contact (3, 4; 11, 12) en ce que la partie femelle (10) est fermée, sur son côté tourné vers l'extrémité libre de l'aile longitudinale (2), par une paroi frontale (19) guidée sur la surface frontale de contact (6) de l'aile longitudinale (2) et en ce que la surface frontale de contact (20) opposée de la partie femelle (10) est guidée sur la surface frontale de contact (5) de l'aile transversale (7).

3. Fixation selon la revendication 1 ou 2, caractérisée en ce que le dos (18) de l'aile longitudinale (2) de la partie mâle (1) présente un creux (8) qui débute de préférence directement sur l'aile transversale (7) de la partie mâle (1) et dont la profondeur correspond de préférencé au moins à l'épaisseur de paroi de l'aile de jonction (14) de la partie femelle (10) composée de deux parois latérales (16, 17), d'une paroi frontale (19) reliant ces dernières du côté frontal et d'une aile de jonction (14) reliant lesdites parois latérales (16, 17) du côté longitudinal et en ce que le nez (9) ainsi formé sur l'aile longitudinale (2) s'engage par complémentarité de formes dans un évidement correspondant (15) de l'aile de jonction (14) de la partie femelle (10).

4. Fixation selon l'une des revendications 1 à 3, caractérisée en ce que les zones latérales de la surface frontale de contact (5) de l'aile transversale (7), qui s'étendent de part et d'autre de l'aile longitudinale (2) de la partie mâle (1), présentent chacune une largeur correspondant à l'épaisseur de paroi des parois latérales (16, 17) de la partie femelle (10) et en ce que la surface frontale de contact (20) de la partie femelle (10) est guidée dans la zone des parois latérales (16, 17) sur les zones latérales.

5. Fixation selon l'une des revendications 1 à 4, caractérisée en ce que les parois latérales (16, 17) de la partie femelle (10) ont partout la même épaisseur de paroi.

6. Fixation selon l'une des revendications 3 à 5, caractérisée en ce que les surfaces extérieures (21, 22) des parois latérales (16, 17) sont alignées sur les surfaces extérieures (23, 24) de l'aile transversale (7) lorsque la partie mâle (1) et la partie femelle (10) sont emboîtées.

7. Fixation selon l'une des revendications 1 à 6, caractérisée en ce que la surface (25) de l'aile de jonction (14) de la partie femelle (10) est alignée sur la surface (26) de l'aile transversale (7) et sur la surface (27) du nez (9) lorsque la partie mâle (1) et la partie femelle (10) sont emboîtées.

8. Fixation selon l'une des revendications 3 à 7, caractérisée en ce que le nez (9) et l'évidement (15) ont pour l'essentiel une section transversale rectangulaire ou carrée.

9. Fixation selon l'une des revendications 1 à 8, caractérisée en ce qu'elle est en métal ou en matière plastique.

**FIG.1**

**FIG.3**

**FIG.2**

**FIG.4**

**FIG.5**